# FASCICULE DE BREVET EUROPEEN

(11) **EP 2 857 701 B1**
(45) Date de publication et mention de la délivrance du brevet: **25.05.2016**
(21) Numéro de dépôt: 14183052.1
(22) Date de dépôt: 01.09.2014
(51) Int. Cl.: F16B 37/14, F16B 43/00, H02G 3/08

(54) **Organe encastrable dans un trou d'un support**
Organ, das in ein Loch einer Halterung eingebaut werden kann
Member which can be inserted in a hole of a mounting

(30) Priorité: 02.10.2013 FR 1359526
(43) Date de publication de la demande: 08.04.2015
(73) Titulaire: Illinois Tool Works Inc., Glenview, IL 60025 (US)
(72) Inventeur: Perrier, Matthieu, 26000 Valence (FR)
(74) Mandataire: Gevers & Orès

(56) Documents cités:
- DE-A1-102011 108 934
- DE-U1- 8 906 253
- GB-A- 2 261 272

## Description

### DOMAINE TECHNIQUE

La présente invention concerne un organe encastrable dans un trou d'un support, l'organe étant par exemple une cheville à expansion radiale ou une boîte de raccordement électrique.

### ETAT DE L'ART

L'état de l'art comprend notamment le document DE 10 2001 108 934 A qui montre un organe selon le préambule de la revendication 1 et le document DE 89 06 253 U qui montre un kit selon le préambule de la revendication 12.

Une cheville à expansion radiale telle qu'une cheville molly ou du type à extraction est couramment utilisée dans la technique du bâtiment car elle permet de réaliser des fixations solides dans des plaques ou parois fragiles ou friables, telles que des plaques de plâtre (modèle BA13 par exemple), dans des murs ou cloisons en briques creuses, etc.

La cheville est destinée à être encastrée dans un trou percé au préalable dans une paroi pour constituer un support servant de suspension ou de fixation à un autre article. Les chevilles à expansion que l'on trouve sur le marché comportent généralement deux douilles réunies par des éléments longitudinaux qui doivent être amenés à flamber à l'arrière de la paroi devant supporter la cheville. La douille arrière est en général taraudée pour recevoir une vis formant un élément de fixation. L'expansion de la cheville est obtenue par traction sur la tête de vis et écartement de celle-ci de la cheville. L'écartement de la tête de vis de la cheville provoque l'expansion de la cheville et le rapprochement de ses deux douilles, la douille avant s'étendant dans le trou de la paroi à l'arrière de laquelle sont déformés et rabattus les éléments longitudinaux.

Une boîte de raccordement électrique est également couramment utilisée dans le domaine du bâtiment car elle permet de réaliser des liaisons électriques entre des fils électriques (boîte de dérivation) ou entre des fils électriques et un appareil électrique tel qu'une prise de courant murale. Cette boîte est en général équipée de plusieurs éléments de fixation tels que des vis, certains éléments de fixation étant utilisés pour fixer la boîte au support et d'autres étant utilisés pour fixer l'appareil électrique à la boîte.

De nos jours, la qualité de l'air en particulier dans les habitations est un problème d'actualité, d'autant plus sensible que les personnes passent une grande partie de leur temps dans ces espaces intérieurs.

On sait que la pollution de l'air intérieur peut être issue de différentes sources, telles les produits d'entretien, les matériaux de construction et d'ameublement, les pesticides, les revêtements de sol, etc.

La demanderesse s'est posée la question de la pollution de l'air liée à la présence des organes encastrés dans les trous d'un support, et à travers lesquelles de l'air peut circuler entre l'espace caché, derrière le support, et l'espace intérieur de vie, devant le support.

La demanderesse a constaté, à la suite de tests spécifiques d'infiltrométrie, notamment que ces organes sont la source de fuites d'air parasites entre l'espace clos, située derrière la face cachée du support, et l'espace de vie. Les fuites d'air comprennent des premières fuites d'air qui traversent les trous en passant entre les parois internes des trous et les corps des organes et des secondes fuites d'air qui traversent les organes en passant entre les éléments de fixation et les parois internes des organes qui définissent les logements de réception de ces éléments de fixation. Dans le cas d'une cheville à expansion par exemple, les fuites d'air traversent le trou en passant entre la paroi interne du trou et la douille avant de la cheville, et traversent la cheville en passant entre la paroi interne de la cheville et la tige de la vis. Les premières fuites d'air (entre le support et les organes) sont spécifiques aux organes encastrés dans des trous, en général pré-percés, d'un support. En effet, dans le cas d'un organe destiné à former un trou lors de sa pose (comme c'est le cas d'une cheville auto-foreuse), il n'y a en général pas de jeu et donc de problème d'étanchéité à l'air entre le support et l'organe.

Ces fuites d'air sont par ailleurs entretenues et amplifiées par les systèmes de ventilation mécanique des habitations, ce qui entraîne, par le nombre d'organes encastrés dans les matériaux supports d'une habitation, une circulation d'air certes minime mais réelle. Celle-ci est de plus viciée par les particules ou fibres des matériaux (plâtres, isolants, etc.) et autres moisissures se développant dans ces espaces clos, plus ou moins humides, ce qui contribue à nuire à la qualité de l'air dans les habitations, en étant de surcroît nocives pour la santé des personnes.

Par ailleurs, les nouveaux bâtiments construits sont soumis à de nombreux diagnostics pour répondre aux normes en vigueur. L'un de ces diagnostics est le diagnostic d'étanchéité à l'air. Dans la technique actuelle, lorsqu'un organe encastrable dans le trou d'un support est pourvu de moyens d'étanchéité, ces moyens d'étanchéité ne sont pas visibles lorsque l'organe est encastré dans le trou. Il n'est donc actuellement pas possible, pour une personne réalisant un diagnostic d'étanchéité, de déterminer si un organe encastré est équipé ou non de moyens d'étanchéité en regardant simplement cet organe. Il est donc nécessaire de réaliser des tests spécifiques pour mesurer l'étanchéité à l'air de l'organe encastré, ce qui est long et onéreux.

Il existe également un besoin d'organes encastrables du type précité permettant d'assurer une étanchéité à l'eau, dans le cas par exemple où ces organes sont utilisés dans un endroit humide tel qu'une salle de bain par exemple.

La présente invention a pour but de remédier aux problèmes précités de la technique antérieure et propose une solution simple, efficace et économique.

### EXPOSE DE L'INVENTION

L'invention propose un organe encastrable selon la revendication 1.

Selon l'invention, l'organe assure une double étanchéité, en particulier à l'air et/ou à l'eau, une première étanchéité entre le support et lui-même et une seconde étanchéité entre l'élément ou les éléments de fixation et lui-même, ce qui permet de renforcer l'étanchéité de l'organe en position encastrée. Par ailleurs, de façon avantageuse, au moins certains des moyens d'étanchéité sont visibles lorsque l'organe est dans cette position encastrée. Autrement dit, ces moyens d'étanchéité sont au moins en partie visibles lors d'une inspection visuelle du support, ce qui facilite un diagnostic d'étanchéité.

Selon un premier mode de réalisation de l'invention, les seconds moyens d'étanchéité comprennent une pastille configurée pour être traversée par l'élément de fixation et à être en appui sur une collerette annulaire externe de l'organe. Cette pastille peut comprendre un orifice central dont le diamètre est inférieur à celui de la partie de l'élément de fixation destinée à traverser cet orifice. La pastille est appliquée sur la collerette d'appui et est située du côté de l'opérateur. Elle est donc visible par ce dernier après la pose de l'organe (et de l'élément de fixation).

En variante, les seconds moyens d'étanchéité comprennent un bouchon de recouvrement de l'élément de fixation et dont la périphérie est configurée pour coopérer à étanchéité avec l'organe. Ce bouchon peut être mis en place par l'opérateur et est donc visible par celui-ci après la pose de l'organe et de l'élément de fixation.

Les premiers et seconds moyens d'étanchéité sont reliés ensemble par au moins un cordon flexible. Ceci permet de rendre imperdables les premiers moyens vis-à-vis des seconds moyens, et inversement. Les seconds moyens d'étanchéité sont reliés à l'organe uniquement par le cordon flexible et les premiers moyens d'étanchéité, de façon à autoriser des déplacements des seconds moyens vis-à-vis de l'organe du fait de la flexibilité du cordon. Les seconds moyens peuvent ainsi être facilement manipulés et mis en place par l'opérateur et ne gênent pas la pose de l'organe. De plus, les seconds moyens ne risquent pas de se dégrader lors de la pose de l'organe, par exemple au moyen d'une pince.

Les premiers moyens d'étanchéité ont de préférence une forme annulaire et s'étendent autour d'un corps cylindrique de l'organe. Ils peuvent être montés derrière une collerette annulaire externe de l'organe, cette collerette étant destinée à prendre appui sur le support. Cette collerette est de préférence celle sur laquelle prend appui la pastille, la pastille étant située du côté de la collerette opposé à celui ou sont situés les premiers moyens d'étanchéité. Ces premiers moyens d'étanchéité peuvent être configurés pour être comprimés entre le corps de l'organe et le support et/ou entre la collerette de l'organe et le support.

Ces premiers moyens d'étanchéité présentent de préférence une surface externe sensiblement tronconique. La forme et les dimensions du trou de réception de l'organe ne sont pas toujours maîtrisées, en particulier lorsque ce trou est percé au moyen d'une perceuse. La surface tronconique des premiers moyens d'étanchéité permet de venir en appui sur le support, même si le trou n'est pas forcément cylindrique ou a un diamètre important par rapport à celui de l'organe. Si l'entrée du trou a une forme tronconique, par « effet de cône » lors du perçage par exemple, ou si le diamètre du trou est relativement important, c'est la partie de plus grand diamètre des premiers moyens d'étanchéité qui prendra appui sur le support pour assurer l'étanchéité.

Avantageusement, les premiers moyens d'étanchéité sont extensibles élastiquement en direction radiale, ce qui permet de les monter sur des organes de différents diamètres. Par exemple, une seule référence de « kit d'étanchéité » tel que décrit ci-dessous pourrait être utilisée pour équiper des organes, tels que des chevilles, de différents diamètres.

Les premiers et seconds moyens d'étanchéité peuvent être réalisés dans un matériau élastiquement déformable, tel qu'un élastomère.

Les premiers et seconds moyens d'étanchéité peuvent être réalisés d'une seule pièce, ce qui facilite leur fabrication. Ils peuvent être fabriqués in situ sur l'organe, par exemple par surmoulage. En variante, ils sont fabriqués indépendamment de l'organe puis rapportés sur celui-ci. Ceci permet de modifier un organe de la technique antérieure pour le rendre conforme à l'invention, en le combinant avec les moyens assurant la double étanchéité, ces moyens étant appelés « kit d'étanchéité » dans la présente demande.

La présente invention concerne donc également un kit d'étanchéité selon la revendication 12.

La présente invention concerne encore une utilisation d'un organe tel que décrit ci-dessus pour assurer l'étanchéité entre cet organe et le support dans un trou duquel est encastré l'organe, et entre l'organe et un élément de fixation reçu par l'organe, caractérisée en ce que l'organe comprend une cheville à expansion radiale ou une boîte de raccordement électrique.

Dans des cas particuliers de réalisation de l'invention, l'organe comprend une cheville à expansion radiale ou une boîte de raccordement électrique.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un premier mode de réalisation d'un organe encastrable selon l'invention, l'organe comportant ici une cheville à expansion radiale ;
- la figure 2 est une vue schématique en coupe axiale de l'organe de la figure 1 ;
- la figure 3 est une vue schématique en coupe axiale de l'organe de la figure 1, après sa pose dans un trou d'un support ; et
- la figure 4 est une vue schématique en coupe axiale d'un kit d'étanchéité pour un organe tel que celui représenté en figure 1 ;
- la figure 5 est vue schématique en perspective d'un autre mode de réalisation d'un organe encastrable selon l'invention, l'organe comportant ici une boîte de raccordement électrique.

### DESCRIPTION DETAILLEE

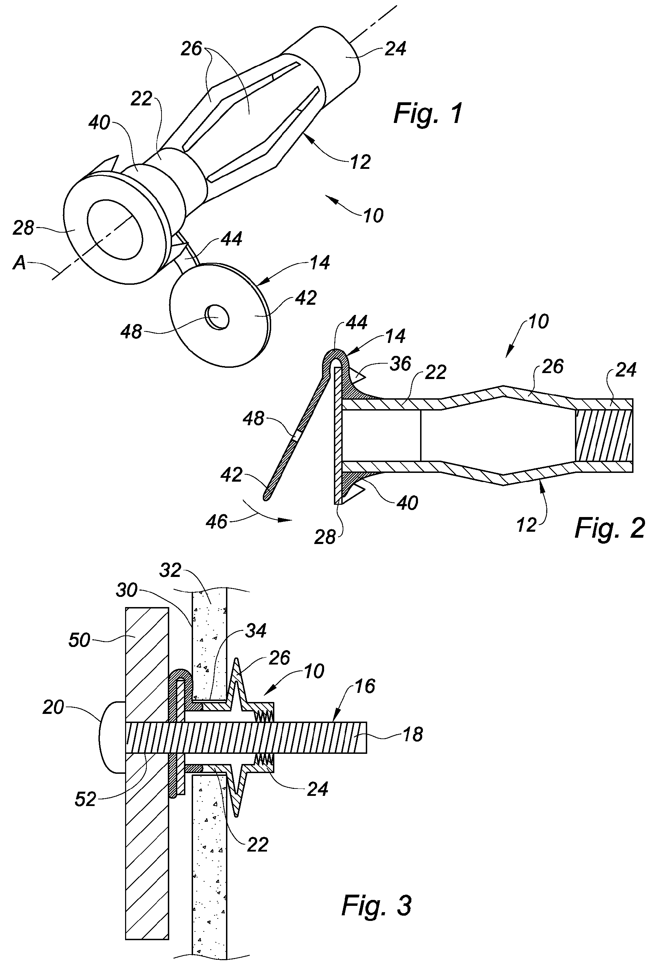

On se réfère d'abord aux figures 1 à 3 qui représentent un premier mode de réalisation de l'organe 10 selon l'invention, cet organe 10 comportant une cheville 12 à expansion radiale associée à des moyens 14 assurant une double étanchéité, en particulier à l'air et/ou à l'eau.

La cheville à expansion 12 est du type molly et est destinée à recevoir une vis 16 d'expansion de la cheville (figure 3).

La vis 16 comprend typiquement une tige filetée 18 reliée à une extrémité à une tête 20. La cheville 12 comprend deux douilles 22, 24 coaxiales et sensiblement de même diamètre externe, ces douilles étant reliées entre elles par des éléments longitudinaux 26 plastiquement déformables. La douille 22, située du côté de la tête de vis 20, comprend à une extrémité une collerette annulaire externe 28, destinée à être en appui sur une face 30 d'un support 32 (tel qu'une plaque de BA13 par exemple) dans le trou 34 duquel est encastrée la cheville. La collerette 28 peut comprendre, du côté opposé à la tête de vis 20, des dents 36 d'ancrage dans le support 32 pour bloquer en rotation la cheville 12 vis-à-vis du support 32, en particulier lors du serrage de la vis 16. L'autre extrémité de la douille 22 est reliée par les éléments longitudinaux 26 à une extrémité de l'autre douille 24, qui a un filetage interne de vissage de la vis 16. Ce type de cheville 12, en général métallique, et sa technique de pose sont bien connus de l'homme du métier.

Dans la présente demande, les termes « avant » et « arrière » sont utilisés pour définir la position d'un élément par rapport à un autre le long de l'axe longitudinal A de l'organe. Ainsi, la douille 22 peut être appelée douille avant et la douille 24 peut être appelée douille arrière, et la collerette 28 comprend une face avant, du côté de la tête de vis 20, et une face arrière, du côté opposé à cette tête de vis.

Les moyens d'étanchéité 14 comprennent des premiers moyens d'étanchéité 40 et des seconds moyens d'étanchéité 42. Les premiers moyens 40 sont destinés à assurer une étanchéité entre la cheville 12 et le support 32 et les seconds moyens 42 sont destinés à assurer une étanchéité entre la vis 16 et la cheville 12.

Les premiers moyens d'étanchéité comprennent une bague annulaire 40 qui s'étend autour de la douille avant 22, juste à l'arrière de la collerette 28. Cette bague 40 comprend une surface cylindrique interne et une surface externe sensiblement tronconique, dont l'extrémité de plus grand diamètre est située du côté de la collerette 28. Le diamètre maximal de la bague 40 est toutefois inférieur au diamètre externe de la collerette 28.

En position de montage, la partie arrière de plus petit diamètre de la bague 40 est engagée dans le trou 34 du support et peut venir en appui radial contre la paroi interne de ce trou. La partie avant de plus grand diamètre de la bague 40 peut venir en appui radial contre la paroi interne de ce trou et/ou en appui axial sur la face avant du support 32. Dans ce dernier cas, la partie avant de la bague 40 est comprimée entre la collerette 28 de la cheville et le support 32. La bague 40 ainsi comprimée peut former des moyens d'anti-rotation (par friction) de la cheville dans le trou du support, permettant éventuellement la suppression des dents 36 précitées. Le type d'appui radial et/ou axial de la bague 40 sur le support 32 dépend notamment de la forme et du diamètre du trou 34.

La bague 40 est reliée par un cordon de matière 44 aux seconds moyens d'étanchéité qui comprennent ici une pastille 42 rabattable sur la face avant de la collerette 28. Le cordon de matière 44 a une longueur, par exemple de quelques millimètres, qui permet une manipulation et un déplacement aisés de la pastille 42 vis-à-vis du reste de l'organe 10, et qui autorise le rabattement de la pastille sur la collerette 28, comme représenté en figure 2 (flèche 46).

La pastille 42 est plane et à contour circulaire. Elle comprend un orifice central 48 de passage de la tige 18 de la vis 16, cet orifice 48 ayant un diamètre qui est de préférence inférieur à celui de la tige 18 pour que la pastille coopère à étanchéité avec cette tige. La pastille 42 a un diamètre inférieur ou égal à celui de la collerette 28 et est destinée à être comprimée au montage entre une pièce 50 et la collerette 28, la vis 16 étant utilisée pour fixer cette pièce 50 au support 32 et traversant un orifice 52 de cette pièce.

Lorsque la pastille 42 est rabattue sur la face avant de la collerette 28, le cordon 44 a une forme sensiblement en U et est à cheval sur la périphérie externe de la collerette (figure 2).

La pastille 42, la bague 40 et le cordon 44 sont de préférence réalisés d'une seule pièce en matériau élastiquement déformable tel qu'en élastomère. Ils peuvent être montés sur la cheville 12 par fabrication *in situ* (surmoulage de la bague 40) ou par déformation élastique. Dans ce dernier cas, la bague 40 est extensible radialement et son diamètre interne est agrandi pour pouvoir engagée la bague sur la cheville.

Il est envisageable que le cordon 44 soit conservé pendant la pose de la cheville 12 et le vissage de la vis 16 car il ne gêne pas cette pose et peut être comprimé entre la collerette 28 et le support 32. Il est également possible de retirer ce cordon 44 en le découpant (par exemple au moyen d'une lame) ou en le déchirant, avant la pose de la cheville ou le vissage de la vis.

Dans le premier cas (le cordon 44 est conservé), ce cordon 44 et la pastille 42 sont visibles par l'opérateur lorsque la pièce 50 n'est pas encore fixée ou est retirée. Du fait de la présence de ce cordon 44 de liaison de la pastille 42 à la bague 40, l'opérateur peut en déduire que l'organe est également équipé de la bague 40 même si celle-ci n'est pas visible par l'opérateur, après la pose de l'organe. Dans le second cas, la pastille 42 est visible par l'opérateur. Il est préférable de conserver le cordon 44, comme dans le premier cas, pour rendre imperdable la pastille 42 et donc éviter de la perdre en particulier lorsque la vis 16 et la pièce 50 sont retirées.

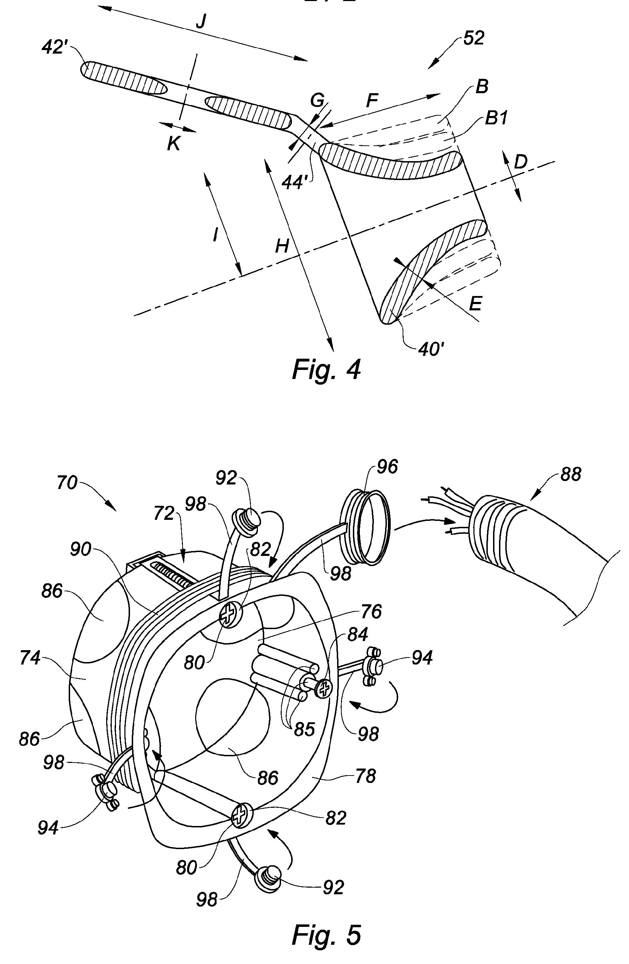

La figure 4 représente une variante de réalisation des moyens d'étanchéité précités et comprend les mêmes éléments que les moyens d'étanchéité décrits en référence aux figures 1 à 3. Cette variante illustre un « kit » d'étanchéité au sens de l'invention. Comme décrit dans ce qui précède, ce kit 52 est destiné à être monté sur une cheville à expansion radiale de la technique antérieure, grâce au caractère extensible radialement de la bague 40'.

Dans l'exemple représenté, cette bague 40' a au repos une forme générale sensiblement tronconique dont l'extrémité de plus grand diamètre est reliée par le cordon 44' à la pastille 42'. Cette position au repos est représentée en traits continus. La bague 40' est ici configurée de façon à ce qu'elle puisse adopter, par extension radiale, une position B dans laquelle elle est sensiblement cylindrique, ainsi que n'importe quelle position B1, entre cette forme cylindrique B et la forme tronconique au repos, ces positions B et B1 étant schématiquement représentées en traits pointillés. Ainsi, le kit d'étanchéité 52 peut être monté sur des chevilles 12 de différents diamètres, la bague 40' étant plus ou moins contrainte en position de montage sur la cheville 12 en fonction du diamètre externe D de la douille avant 22 de cette cheville (D pouvant par exemple varier de 8 à 12 mm environ).

Les références E à K désignent des dimensions du kit 52 et sont données à titre d'exemple. L'épaisseur E de la bague 40' est comprise entre 0,5 et 3mm et est par exemple de l'ordre de 1 mm environ. La longueur F de la bague 40' est comprise entre 5 et 12mm et est par exemple de l'ordre de 8mm environ. L'épaisseur G du cordon 44' est comprise entre 0,5 et 2mm et est par exemple de l'ordre de 0,8mm environ. Le diamètre externe H de la bague 40 est compris entre 10 et 20mm et est par exemple de l'ordre de 13mm environ. Le rayon l depuis le centre de la bague 40 jusqu'à l'extrémité radialement externe du cordon 44' est compris entre 10 et 20mm et est par exemple de l'ordre de 16mm environ. Le diamètre J de la pastille 42' est compris entre 8 et 15mm et est par exemple de l'ordre de 12mm environ. Le diamètre K de l'orifice 48' de la pastille 42' est compris entre 2 et 5mm et est par exemple de l'ordre de 3,5mm environ.

On se réfère désormais à la figure 5 qui représente un autre mode de réalisation de l'organe 70 selon l'invention, cet organe 70 comportant une boîte 72 de raccordement électrique associée à des moyens assurant une double étanchéité, en particulier à l'air.

La boîte 72 comprend un corps cylindrique 74 dont l'extrémité arrière est fermée par une paroi de fond 76 et dont l'extrémité avant est reliée à une collerette annulaire externe 78 destinée à être en appui sur une face avant d'un support, comme dans le précédent mode de réalisation.

Cette boîte 72 est destinée à être encastrée dans un trou percé par exemple au moyen d'une scie cloche, et comprend des premières vis 80 qui sont destinées à assurer la fixation de la boîte vis-à-vis du support. De façon connue, ces vis 80 traversent des passages de la boîte 72 et sont pré-vissées dans des mors qui sont destinés à prendre appui sur la face arrière du support lors du serrage des vis. Comme cela est visible dans le dessin, les têtes de ces premières vis 80 sont logées dans des évidements cylindriques 82 de la boîte.

La boîte 72 comprend des deuxièmes vis 84 qui sont destinées à assurer la fixation d'un appareil électrique, tel qu'une prise de courant murale, à la boîte, chacune de ces vis peut être vissée dans trois passages 85 adjacents de la boîte, ce qui autorise une certaine liberté de montage de l'appareil électrique en particulier pour rattraper un éventuel désalignement des vis 80 avec un plan vertical.

La boîte 72 est en général fabriquée dans un matériau plastique relativement rigide. Le corps 74 et la paroi de fond 76 de la boîte comprennent ici des parties 86 réalisées dans un matériau élastomère, qui sont destinées à être découpées au moyen d'une lame pour former un orifice de passage d'une gaine électrique 88, du type ICTA par exemple. Chaque orifice découpé doit avoir un diamètre inférieur au diamètre externe de la gaine 88 de façon à ce que la gaine soit engagée légèrement en force à travers cet orifice et que le bord périphérique interne de l'orifice coopère à étanchéité avec la gaine. Ceci évite le passage d'air entre la gaine 88 et la boîte 72. Ce type de boîte 72 est connu de l'homme du métier, par exemple sous la dénomination Multifix Air® (Schneider).

Selon l'invention, cette boîte 72 est associée à des premiers moyens 90 destinés à assurer une étanchéité entre le corps 74 de la boîte et le support dans le trou duquel est engagée la boîte, des deuxièmes moyens 92, 94 destinés à assurer une étanchéité entre les vis 80, 84 et la boîte 72, et des troisièmes moyens 96 destinés à assurer une étanchéité entre la gaine 88 et les fils électriques qui traversent cette gaine.

Les premiers moyens d'étanchéité comprennent une bague annulaire 90 qui s'étend autour du corps 74 de la boîte, à l'arrière de la collerette 78. La bague 90 comprend ici des léchettes annulaires périphériques destinées à coopérer avec la paroi interne du trou de réception de la boîte.

La bague 90 est reliée par des cordons de matière 98 aux deuxièmes et troisièmes moyens d'étanchéité qui comprennent ici des bouchons 92, 94, 96. Chaque cordon de matière 98 a une longueur, par exemple de quelques centimètres, qui permet une manipulation et un déplacement aisés des bouchons, et qui autorise le positionnement par l'opérateur des bouchons dans des positions d'étanchéité.

Les bouchons 92 sont configurés pour être engagés à étanchéité dans les évidements 82, et les bouchons 94 comprennent des plots destinés à être engagés dans les passages 85 précités de vissage des vis 84. On comprend que les passages de réception des vis 80, 84 traversent la boîte et qu'en l'absence des bouchons 92, 94, les espaces situés à l'intérieur et à l'extérieur du support seraient en communication fluidique par ces passages.

Le bouchon 96 est configuré pour être engagé à étanchéité dans l'extrémité libre de la gaine 88 logée dans la boîte et à être traversé à étanchéité par les fils électriques qui passent dans la gaine. De cette façon, l'organe 70 monté dans le trou du support est complètement étanche à l'air.

Comme dans le précédent mode de réalisation, les cordons 98 peuvent être conservés ou découpés lors du montage de la boîte 72. La bague 90, les cordons 98 et les bouchons 92, 94, 96 sont de préférence réalisés d'une seule pièce dans un matériau élastiquement déformable tel qu'en élastomère, et peuvent se présenter sous la forme d'un kit tel que décrit dans ce qui précède.

Les bouchons 92, 94, 96, et éventuellement les cordons 98, s'ils sont conservés, restent visibles par l'opérateur après montage.

## Revendications

1. Organe (10, 70) encastrable dans un trou (34) d'un support (32) et destiné à recevoir au moins un élément de fixation (16, 80, 84) tel qu'une vis, cet organe comportant des premiers moyens (40, 90) d'étanchéité entre l'organe et le support et des seconds moyens (42, 92-96) d'étanchéité entre l'élément de fixation et l'organe, les premiers et seconds moyens étant réalisés dans des matériaux différents de celui de l'organe, au moins une partie desdits premiers et seconds moyens d'étanchéité étant configurée pour être visible après le montage de l'organe dans le trou du support, **caractérisé en ce que** les seconds moyens comprennent une pastille ou un bouchon rabattable et relié aux premiers moyens uniquement par au moins un cordon (44, 98) flexible, de façon à autoriser des déplacements des seconds moyens vis-à-vis de l'organe du fait de la flexibilité du cordon.

2. Organe (10) selon la revendication 1, **caractérisé en ce que** la pastille (42) est configurée pour être traversée par l'élément de fixation (16) et à être en appui sur une collerette annulaire externe (28) de l'organe.

3. Organe (10) selon la revendication 2, **caractérisé en ce que** la pastille (42) comprend un orifice central (48) dont le diamètre est inférieur à celui de la partie de l'élément de fixation (16) destinée à traverser cet orifice.

4. Organe (70) selon la revendication 1, **caractérisé en ce que** le bouchon (92, 94, 96) est configuré pour recouvrir l'élément de fixation (80, 84) et sa périphérie est configurée pour coopérer à étanchéité avec l'organe.

5. Organe (10, 70) selon l'une des revendications précédentes, **caractérisé en ce que** les premiers moyens d'étanchéité (40, 90) ont une forme annulaire et s'étendent autour d'un corps cylindrique (74) de l'organe.

6. Organe (10) selon la revendication 5, **caractérisé en ce que** les premiers moyens d'étanchéité (40) présentent une surface externe sensiblement tronconique.

7. Organe (10, 70) selon la revendication 5 ou 6, **caractérisé en ce que** les premiers moyens d'étanchéité (40, 90) sont extensibles élastiquement en direction radiale.

8. Organe (10, 70) selon l'une des revendications 5 à 7, **caractérisé en ce que** les premiers moyens d'étanchéité (40, 90) sont montés derrière une collerette annulaire externe (28, 78) de l'organe, cette collerette étant destinée à prendre appui sur le support.

9. Organe (10, 70) selon l'une des revendications précédentes, **caractérisé en ce qu'**il comprend une cheville (12) à expansion radiale ou une boîte (72) de raccordement électrique.

10. Organe (10, 70) selon l'une des revendications précédentes, **caractérisé en ce que** les premiers et seconds moyens d'étanchéité (40, 42, 90, 92-96) sont réalisés dans un matériau élastiquement déformable.

11. Organe (10, 70) selon l'une des revendications précédentes, **caractérisé en ce que** les premiers et seconds moyens d'étanchéité (40, 42, 90, 92-96) sont formés d'une seule pièce.

12. Kit d'étanchéité pour un organe (10, 70) selon l'une des revendications précédentes, comportant lesdits premiers et seconds moyens d'étanchéité (40, 42, 90, 92-96), les premiers moyens d'étanchéité (40, 90) ayant une forme annulaire et étant reliés auxdits seconds moyens d'étanchéité, ces premiers et seconds moyens d'étanchéité étant formés d'une seule pièce en matériau élastiquement déformable, de façon à ce que le kit puisse être monté sur l'organe par déformation élastique, **caractérisé en ce que** lesdits premiers moyens d'étanchéité sont reliés :
- par au moins un cordon (44) à au moins une pastille (42) comportant un orifice central (48) et formant lesdits seconds moyens d'étanchéité, ou
- par plusieurs cordons (98) à des bouchons (92, 96) formant lesdits seconds moyens d'étanchéité.

13. Utilisation d'un organe (10, 70) selon l'une des revendications 1 à 11 pour assurer l'étanchéité, en particulier à l'air et/ou à l'eau, entre cet organe et le support (32) dans un trou (34) duquel est encastré l'organe, et entre l'organe et un élément de fixation reçu par l'organe, **caractérisée en ce que** l'organe comprend une cheville (12) à expansion radiale ou une boîte (72) de raccordement électrique.

## Patentansprüche

1. Element (10, 70), das in ein Loch (34) einer Halterung (32) eingebaut werden kann und dazu bestimmt ist, mindestens ein Befestigungselement (16, 80, 84), wie eine Schraube aufzunehmen, wobei dieses Element erste Dichtungsmittel (40, 90) zwischen dem Element und der Halterung und zweite Dichtungsmittel (42, 92-96) zwischen dem Befestigungselement und dem Element umfasst, wobei die ersten und zweiten Mittel aus zu jenem des Elements unterschiedlichen Materialien hergestellt sind, wobei mindestens ein Teil der ersten und zweiten Dichtungsmittel derart ausgeführt ist, dass er nach der Montage des Elements in dem Loch der Halterung sichtbar ist, **dadurch gekennzeichnet, dass** die zweiten Mittel eine Tablette oder einen klappbaren Deckel umfassen, der mit den ersten Mitteln nur durch mindestens eine flexible Schnur (44, 98) verbunden ist, um Bewegungen der zweiten Mittel gegenüber dem Element auf Grund der Flexibilität der Schnur zu gestatten.

2. Element (10) nach Anspruch 1, **dadurch gekennzeichnet, dass** die Tablette (42) derart ausgeführt ist, dass sie von dem Befestigungselement (16) durchquert wird und auf einem äußeren ringförmigen Kragen (28) des Elements aufliegt.

3. Element (10) nach Anspruch 2, **dadurch gekennzeichnet, dass** die Tablette (42) eine Mittelöffnung (48) umfasst, deren Durchmesser kleiner als jener des Teils des Befestigungselements (16) ist, der dazu bestimmt ist, diese Öffnung zu durchqueren.

4. Element (70) nach Anspruch 1, **dadurch gekennzeichnet, dass** der Deckel (92, 94, 96) derart ausgeführt ist, dass er das Befestigungselement (80, 84) bedeckt, und seine Peripherie derart ausgeführt ist, dass sie dicht mit dem Element zusammenwirkt.

5. Element (10, 70) nach einem der vorhergehenden Ansprüche, **dadurch gekennzeichnet, dass** die ersten Dichtungsmittel (40, 90) eine ringförmige Form haben und sich um einen zylindrischen Körper (74) des Elements herum erstrecken.

6. Element (10) nach Anspruch 5, **dadurch gekennzeichnet, dass** die ersten Dichtungsmittel (40) eine im Wesentlichen kegelstumpfartige Außenfläche aufweisen.

7. Element (10, 70) nach Anspruch 5 oder 6, **dadurch gekennzeichnet, dass** die ersten Dichtungsmittel (40, 90) in Radialrichtung elastisch dehnbar sind.

8. Element (10, 70) nach einem der Ansprüche 5 bis 7, **dadurch gekennzeichnet, dass** die ersten Dichtungsmittel (40, 90) hinter einem äußeren ringförmigen Kragen (28, 78) des Elements angeordnet sind, wobei dieser Kragen dazu bestimmt ist, auf der Halterung zur Auflage zu gelangen.

9. Element (10, 70) nach einem der vorhergehenden Ansprüche, **dadurch gekennzeichnet, dass** es einen Radialspreizdübel (12) oder einen elektrischen Anschlusskasten (72) umfasst.

10. Element (10, 70) nach einem der vorhergehenden Ansprüche, **dadurch gekennzeichnet, dass** die ersten und zweiten Dichtungsmittel (40, 42, 90, 92-96) aus einem elastisch verformbaren Material hergestellt sind.

11. Element (10, 70) nach einem der vorhergehenden Ansprüche, **dadurch gekennzeichnet, dass** die ersten und zweiten Dichtungsmittel (40, 42, 90, 92-96) aus einem Stück gebildet sind.

12. Dichtungsbausatz für ein Element (10, 70) nach einem der vorhergehenden Ansprüche, umfassend die ersten und zweiten Dichtungsmittel (40, 42, 90, 92-96), wobei die ersten Dichtungsmittel (40, 90) eine ringförmige Form haben und mit den zweiten Dichtungsmitteln verbunden sind, wobei diese ersten und zweiten Dichtungsmittel aus einem Stück aus einem elastisch verformbaren Material hergestellt sind, so dass der Bausatz auf dem Element durch elastische Verformung montiert werden kann, **dadurch gekennzeichnet, dass** die ersten Dichtungsmittel verbunden sind:
- durch mindestens eine Schnur (44) mit mindestens einer Tablette (42), die eine Mittelöffnung (48) umfasst und die zweiten Dichtungsmittel bildet, oder
- durch mehrere Schnüre (98) mit Deckeln (92, 96), die die zweiten Dichtungsmittel bilden.

13. Verwendung eines Elements (10, 70) nach einem der Ansprüche 1 bis 11, um die Dichtigkeit, insbesondere gegen Luft und/oder Wasser, zwischen diesem Element und der Halterung (32), in ein Loch (34) derselben das Element eingebaut ist, und zwischen dem Element und einem von dem Element aufgenommenen Befestigungselement zu gewährleisten, **dadurch gekennzeichnet, dass** das Element einen Radialspreizdübel (12) oder einen elektrischen Anschlusskasten (72) umfasst.

## Claims

1. Member (10, 70) that can be flush mounted in a hole (34) of a support (32) and intended to receive at least one fastening element (16, 80, 84) such as a screw, this member comprising first sealing means (40, 90) between the member and the support and second sealing means (42, 92-96) between the fastening element and the member, the first and second means being produced in materials that are different from that of the member, at least a part of said first and second sealing means being configured to be visible after the member has been mounted in the hole of the support, **characterized in that** the second means comprise a pad or a plug which is hinged and linked to the first means only by at least one flexible strap (44, 98), so as to allow displacements of the second means with respect to the member by virtue of the flexibility of the strip.

2. Member (10) according to Claim 1, **characterized in that** the pad (42) is configured to be passed through by the fastening element (16) and to bear on an outer annular collar (28) of the member.

3. Member (10) according to Claim 2, **characterized in that** the pad (42) comprises a central orifice (48), whose diameter is less than that of the part of the fastening element (16) intended to pass through this orifice.

4. Member (70) according to Claim 1, **characterized in that** the plug (92, 94, 96) is configured to cover the fastening element (80, 84) and its periphery is configured to cooperate in the sealing function with the member.

5. Member (10, 70) according to one of the preceding claims, **characterized in that** the first sealing means (40, 90) have an annular form and extend around a cylindrical body (74) of the member.

6. Member (10) according to Claim 5, **characterized in that** the first sealing means (40) have a substantially truncated outer surface.

7. Member (10, 70) according to Claim 5 or 6, **characterized in that** the first sealing means (40, 90) are elastically extendable in the radial direction.

8. Member (10, 70) according to one of Claims 5 to 7, **characterized in that** the first sealing means (40, 90) are mounted behind an outer annular collar (28, 78) of the member, this collar being intended to bear on the support.

9. Member (10, 70) according to one of the preceding claims, **characterized in that** it comprises a radial expansion plug (12) or an electrical connection box (72).

10. Member (10, 70) according to one of the preceding claims, **characterized in that** the first and second sealing means (40, 42, 90, 92-96) are produced in an elastically deformable material.

11. Member (10, 70) according to one of the preceding claims, **characterized in that** the first and second sealing means (40, 42, 90, 92-96) are formed of a single piece.

12. Sealing kit for a member (10, 70) according to one of the preceding claims, comprising said first and second sealing means (40, 42, 90, 92-96), the first sealing means (40, 90) having an annular form and being linked to said second sealing means, these first and second sealing means being formed of a single piece in an elastically deformable material, such that the kit can be mounted on the member by elastic deformation, **characterized in that** said first sealing means are linked:
- by at least one strap (44) to at least one pad (42) comprising a central orifice (48) and forming said second sealing means, or
- by a number of straps (98) to plugs (92, 96) forming said second sealing means.

13. Use of a member (10, 70) according to one of Claims 1 to 11 to ensure the seal tightness, in particular to air and/or to water, between this member and the support (32) in a hole (34) of which the member is flush mounted, and between the member and a fastening element received by the member, **characterized in that** the member comprises a radial expansion plug (12) or an electrical connection box (72).
